# FASCICULE DE BREVET EUROPEEN

(11) **EP 3 142 508 B1**
(45) Date de publication et mention de la délivrance du brevet: **10.07.2019**
(21) Numéro de dépôt: 15732306.4
(22) Date de dépôt: 13.05.2015
(51) Int. Cl.: A41C 5/00, A41C 3/00

(54) **SOUS-VÊTEMENT RECEVANT UNE COUCHE INTERMÉDIAIRE FINE DE COLLAGE ENTRE DEUX TEXTILES AVANT THERMOFORMAGE**
UNTERKLEID, DAS VOR DEM WARMFORMEN EINE DÜNNE ADHÄSIONSKLEBEZWISCHENSCHICHT ZWISCHEN ZWEI TEXTILIEN ERHÄLT
UNDERGARMENT RECEIVING A THIN INTERMEDIATE LAYER OF ADHESIVE BONDING BETWEEN TWO TEXTILES BEFORE THERMOFORMING

(30) Priorité: 14.05.2014 FR 1454298
(43) Date de publication de la demande: 22.03.2017
(73) Titulaire: Hanes Operations Europe SAS, 92500 Rueil-Malmaison (FR)
(72) Inventeur: TURLAN, Manon, F-71710 Marmagne (FR)
(74) Mandataire: Conroy, John
(86) Numéro de dépôt international: PCT/FR2015/051273
(87) Numéro de publication internationale: WO 2015/173524

(56) Documents cités:
- WO-A1-2007/031650

## Description

La présente invention concerne un procédé de fabrication de sous- vêtements, ainsi que des sous-vêtements obtenus avec un tel procédé de fabrication, en particulier des soutiens-gorge.

WO 2007/031650 A1 concerne un composant de soutien-gorge monopièce multicouche et son procédé de fabrication.

Un procédé connu de fabrication d'un sous-vêtement, en particulier d'un soutien-gorge pour femme, présenté notamment par le document FR-A1 - 2850536, comporte la dépose et la réticulation d'un matériau à mémoire de forme en couche épaisse sur certaines parties d'une pièce textile, comme un élastomère de silicone, puis la mise en forme de cette pièce textile par thermoformage.

Un découpage du contour du sous-vêtement est réalisé ensuite, puis la fixation d'accessoires si nécessaire, pour obtenir le produit fini.

On utilise généralement des textiles fins et très élastiques, qui peuvent comporter des décors comme de la broderie.

On obtient alors un sous-vêtement comportant des zones élastiques disposant de formes prédéfinies, réalisées par le matériau à mémoire de forme, qui constituent des renforts soutenant certaines parties du corps pour leurs donner un aspect particulier.

On réalise ainsi notamment des soutiens-gorge légers et extensibles pour ne pas gêner les mouvements des femmes, comportant des bonnets procurant à la femme une silhouette agréable par un maintien efficace des seins.

En complément, de manière connue, on ajoute à ce procédé le collage d'un deuxième textile sur le premier, enserrant à l'intérieur entre les deux la couche épaisse de renfort déposée sur certaines parties, qui réalise alors un collage entre les deux textiles. On peut de plus compléter en dehors des renforts élastiques le collage du deuxième textile sur le premier, avec des points de silicone déposés localement.

Toutefois les deux tissus ne sont pas alors entièrement solidarisés, on peut obtenir après le thermoformage, notamment si la couche de renfort a été moulée à plat, des fronces des tissus qui peuvent être désagréables au contact, et inesthétiques. Les fronces peuvent aussi donner, en particulier si on réalise des dessins ornementaux sur les tissus, une impression de fouillis qui n'est pas élégante.

De plus si on veut obtenir des bords découpés du sous-vêtement comportant une bonne cohésion, on est obligé d'étendre la couche épaisse de silicone jusqu'à ces bords, alors que la fonction de renfort élastique ne le demande pas forcément.

Par ailleurs dans le cas d'un collage d'un tissu sur l'autre par points de silicone, ces points peuvent être visibles et disgracieux.

La présente invention a notamment pour but d'éviter ces inconvénients de la technique antérieure.

La présente invention est définie dans les revendications. L'invention propose un procédé de fabrication d'un sous-vêtement présentant deux textiles superposés, comportant la dépose sur certaines parties de renforts comprenant une couche épaisse d'un matériau élastique à mémoire de forme, la polymérisation de ce matériau ainsi que la mise en forme des textiles du sous-vêtement par thermoformage, remarquable en ce qu'il comporte une étape de dépose sur toute la surface d'au moins un des textiles, d'une couche fine d'un matériau élastique de collage, et ensuite une étape de polymérisation de cette couche fine de collage lors du thermoformage de mise en forme.

Un avantage de ce procédé de fabrication est que la couche fine du matériau élastique assure un collage continu de toute la surface des textiles entre eux, ce qui évite la formation de fronces.

La forme des renforts peut être quelconque, indépendamment des décors réalisés sur les tissus, ce qui permet de réaliser des sous-vêtements, notamment des soutiens-gorge, comportant une grande nervosité tout en assurant une liberté de mouvement.

De plus on peut réaliser des découpes du contour du sous-vêtement en des endroits quelconques en dehors des renforts, présentant une solidarisation des deux textiles qui reste bien assurée.

On obtient alors des sous-vêtements qui peuvent être très fins et transparents, fortement décorés, tout en gardant une souplesse et une nervosité exceptionnelle.

Le procédé de fabrication selon l'invention peut comporter de plus une ou plusieurs des caractéristiques suivantes, qui peuvent être combinées entre elles.

En particulier, le procédé de fabrication comprend une étape de polymérisation de la couche de renfort, avant la polymérisation de la couche fine de collage.

En complément, le procédé peut comporter des étapes de dépose de plusieurs couches de renfort sur au moins un des textiles, après à chaque fois polymérisation de la couche précédente. On réalise ainsi des épaisseurs et des élasticités variables du renfort selon la localisation.

En particulier, la dernière couche de renfort peut être polymérisée en même temps que la couche fine de collage lors du thermoformage. On obtient ainsi une bonne cohésion du collage avec la dernière couche de renfort.

Le procédé de fabrication selon l'invention comprend une étape de dépose préalable sur le textile recevant la couche de renfort, d'une couche barrière d'un matériau élastique, qui est polymérisée avant la dépose de ce renfort.

Avantageusement, après la polymérisation de la couche fine de collage lors du thermoformage, le procédé comporte une étape de découpe des bords du sous-vêtement. On obtient des découpes nettes des bords.

L'invention a aussi pour objet un sous-vêtement présentant deux textiles superposés comportant entre eux au moins une couche épaisse de renfort, qui est produit avec un procédé de fabrication présentant l'une quelconque des caractéristiques précédentes.

Avantageusement, le matériau élastique à mémoire de forme ainsi que le matériau élastique de collage, est un silicone. Ce matériau comporte une bonne élasticité ainsi qu'une stabilité en température.

Dans ce cas, le silicone peut présenter une dureté d'environ 30 Shore.

Avantageusement, les textiles présentent une capacité d'élongation d'au moins 125% dans une des directions. Les textiles peuvent ainsi suivre les mouvements de la personne.

L'invention a de plus pour objet un soutien-gorge formé par un sous-vêtement comprenant l'une quelconque des caractéristiques précédentes, qui comporte au moins une couche de renfort dans la partie inférieure des bonnets recevant les seins. Ces renforts inférieurs procurent un soutien efficace des seins et assurent leurs mises en forme.

En particulier, la découpe du bord du soutien-gorge qui se trouve en haut des bonnets, peut ne pas comporter de couche de renfort épaisse. On obtient un aspect discret de cette partie supérieure qui peut être visible.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un dessin d'un soutien-gorge comportant des zones de renforts, réalisé avec un procédé selon l'art antérieur cité ci-dessus ; et
- la figure 2 est un dessin d'un soutien-gorge réalisé avec un procédé selon l'invention.

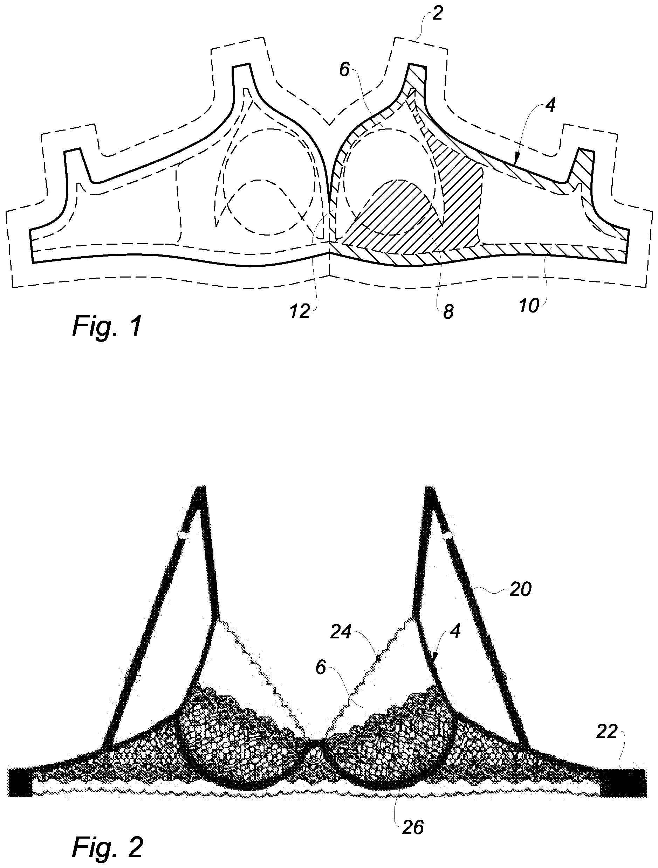

La figure 1 présente une ébauche 2 qui une fois finie sera découpée suivant le contour extérieur final 4, puis recevra des équipements afin de former un soutien-gorge.

Le soutien-gorge comporte une pièce de textile réalisée dans une matière élastique et légère, faite dans un tissu en fibres synthétiques ou naturelles.

Le soutien-gorge comporte des bonnets 6 formés par thermoformage, pour recevoir les seins de la femme et les soutenir en leur donnant une forme esthétique.

Des renforts 8 formant une couche de silicone épaisse, sont déposés sur le contour extérieur complet 10 du soutien-gorge, sur la liaison centrale 12 entre les deux parties symétriques, ainsi que sur la partie inférieure du bonnet 6 en couvrant sensiblement un secteur d'environ 90° qui a pour centre le point central de ce bonnet.

On utilise de préférence un silicone avec un grade médical pour éviter des réactions avec la peau, qui est déposé suivant une épaisseur comprise entre 0,5 et 1mm, du côté intérieur ou extérieur du tissu.

Le silicone est polymérisé une température comprise entre 150 et 200°C, par exemple dans un four, avec une presse à chaleur, ou par rayonnement infra-rouge. Les bonnets 6 sont ensuite thermoformés dans un moule pour donner une configuration aux tissus et obtenir la forme définitive.

La figure 2 présente un soutien-gorge selon l'invention qui est entièrement fini, comprenant en plus des bretelles 20 et des moyens d'agrafage dans le dos 22.

L'allongement des silicones utilisés pour les renforts 8 pouvant être d'environ 600% avant rupture, on utilise des textiles présentant un allongement important, qui est de préférence d'au moins 125% dans une direction, et si possible plus de 125% dans les deux directions, de manière à suivre la déformation de ces renforts.

En particulier on peut utiliser un silicone bi-composant.

Un procédé de fabrication de ce soutien-gorge est le suivant. On dépose le silicone formant la couche de renfort 8 suivant une épaisseur comprise avantageusement entre 0,1 et 3mm, sur le côté d'une première pièce textile appelé intérieur, destiné à venir en appui sur une deuxième pièce textile.

On peut avantageusement réaliser cette dépose suivant un dessin précis par un procédé de sérigraphie, comprenant la pose d'une grille fine comprenant des ouvertures partiellement dégagées suivant les zones de renfort à réaliser, puis le coulissement d'une raclette sur cette grille de manière à forcer le passage de la matière se trouvant dessus, au travers des ouvertures.

Avec ce procédé de sérigraphie on obtient en particulier une imprégnation du silicone dans le textile, ce qui augmente sa nervosité, c'est-à-dire la force de rappel dans sa position initiale.

Parallèlement on dépose une fine couche de silicone sur la face intérieure complète de la deuxième pièce textile, qui est avantageusement comprise entre 0,005 et 0,1mm.

En particulier pour ces couches, un silicone comportant une dureté d'environ 30 Shore convient bien pour les applications des soutiens-gorge.

On assemble les deux textiles en mettant les faces intérieures comprenant leur couches de silicone en appui l'une sur l'autre. Puis on met cet ensemble sur un moule de mise en forme des bonnets, et ont cuit l'ensemble de manière à effectuer simultanément une réticulation des deux couches, et une mise en forme des textiles par thermoformage.

Les équipements comme les bretelles 20 ou les moyens d'agrafage 22 peuvent être fixés en même temps lors de la polymérisation, ou rapportés ensuite.

On obtient ainsi après la découpe du contour 4 un produit fini particulièrement homogène, les deux textiles étant collés entre eux sur l'ensemble de leurs surfaces, tout en gardant une très grande souplesse. On peut en particulier réaliser après la découpe un bord 24 du soutien-gorge se trouvant en haut des bonnets 6, qui est très fin et quasiment transparent car ne comportant pas de couche de renfort épaisse.

On peut réaliser aussi un décor très travaillé sur la partie inférieure des bonnets 26, qui ne présentera aucune fronce, ce qui préserve l'aspect esthétique de ce décor.

Les fibres synthétiques ou naturelles des tissus peuvent être notamment du polyester, du polyamide, du coton, du modal ou du viscose. On notera que la couche fine de collage peut apporter une meilleure tenue au thermoformage des matériaux à base de fibres naturelles, qui habituellement se prêtent mal à cette opération.

En variante de ce procédé, on peut d'abord effectuer une polymérisation en température du silicone de la couche épaisse de renfort 8, déposé sur le premier textile, qui est effectué à plat ou suivant une première forme. On dépose ensuite le deuxième textile comportant sa couche fine et complète de collage, sur le premier textile, et on dispose l'ensemble sur le moule donnant la forme finale. Puis par un chauffage au four, simultanément on thermoforme les textiles, et on polymérise la fine couche de silicone de collage.

On peut en complément déposer plusieurs couches de renfort 8 sur un seul ou sur les deux textiles, avec à chaque fois polymérisation de la couche précédente. Les couches se superposent partiellement, afin d'obtenir des variations d'épaisseur de ce renfort comportant des caractéristiques d'allongement et de nervosité variables suivant les emplacements.

La polymérisation finale de la couche mince de collage et le thermoformage des textiles, peut se faire alors avec la dernière couche de renfort déjà polymérisée, ou en même temps que la polymérisation de cette dernière couche.

On notera que le silicone réticulé étant insensible à la température, la cuisson pour effectuer le collage ne modifie pas la couche épaisse de renfort de silicone qui est déjà polymérisée, et en particulier la forme qui lui est déjà donnée. Le sous-vêtement dispose ainsi d'une très bonne tenue au lavage en température grâce à l'inertie du silicone, sa forme ainsi que son élasticité restent constantes.

Le silicone de collage déposé en couche mince peut en particulier être transparent, ce qui permet avec des textiles très légers d'obtenir des zones quasiment transparentes. En variante on peut utiliser un silicone coloré pour obtenir certains effets esthétiques.

En complément le procédé comprend la dépose sur le textile recevant la couche de renfort 8, d'une couche barrière avant la pose de cette couche de renfort. La couche barrière constitue après sa polymérisation une protection qui permet de maintenir sur le textile la couche de renfort 8 restant mouillée, pendant les manipulations avant sa polymérisation finale. On évite ainsi un écoulement du silicone mouillé au travers du textile, en particulier pour les textiles présentant des dessins comportant des ouvertures importantes.

## Revendications

1. Procédé de fabrication d'un sous-vêtement comprenant deux textiles superposés, en couches, comprenant:
la dépose, sur certaines parties, de renforts (8) comprenant une épaisse couche de matériau élastique à mémoire de forme,
la polymérisation de ce matériau élastique à mémoire de forme ainsi que la à mise en forme des textiles du sous-vêtement par thermoformage,
le procédé de fabrication comprenant également une étape de dépose sur toute la surface d'au moins l'un des textiles, d'une couche fine d'un matériau élastique de collage et ensuite une étape de polymérisation de cette couche fine de collage lors du thermoformage de mise en forme, et
**caractérisé en ce que** le procédé de fabrication comprend une étape de dépose préalable sur le textile recevant la couche de renfort (8), d'une couche barrière en matériau élastique, qui est polymérisée avant la dépose de ce renfort.

2. Procédé de fabrication selon la revendication 1, **caractérisé en ce que** le procédé de fabrication comprend une étape de polymérisation de la couche de renfort (8), avant la polymérisation de la couche fine de collage.

3. Procédé de fabrication selon la revendication 1 ou 2, **caractérisé en ce que** le procédé de fabrication comprend des étapes de dépose de plusieurs couches de renfort (8) sur au moins l'un des textiles après la polymérisation, à chaque fois, de la couche précédente.

4. Procédé de fabrication selon la revendication 3, **caractérisé en ce que** la dernière couche de renfort (8) est polymérisée en même temps que la couche fine de collage lors du thermoformage.

5. Procédé de fabrication selon l'une quelconque des revendications précédentes, **caractérisé en ce qu'**après la polymérisation de la couche fine de collage lors du thermoformage, le procédé de fabrication comprend une étape de découpe des bords du sous-vêtement (4).

6. Procédé de fabrication selon l'une quelconque des revendications précédentes, dans lequel la dépose de la couche de renfort (8) est réalisée par un procédé de sérigraphie comprenant la pose d'une grille fine comprenant des ouvertures partiellement dégagées suivant les zones de renfort à réaliser, puis le coulissement d'une raclette sur cette grille de manière à forcer le passage de la matière se trouvant dessus, au travers des ouvertures.

7. Sous-vêtement comprenant deux textiles superposés comprenant entre eux au moins une couche épaisse de renfort (8) d'un matériau élastique à mémoire de forme polymérisé, **caractérisé en ce que** le sous- vêtement est produit avec un procédé de fabrication selon l'une quelconque des revendications précédentes, de telle sorte que ledit sous-vêtement ait une couche fine d'un matériau élastique de collage polymérisé sur toute la surface d'au moins l'un des textiles et une couche barrière d'un matériau élastique qui est polymérisée sur le textile qui reçoit la couche de renfort (8).

8. Sous-vêtement selon la revendication 7, **caractérisé en ce que** le matériau à mémoire de forme élastique ainsi que le matériau élastique de collage, est un silicone.

9. Sous-vêtement selon la revendication 8, dans lequel le silicone a une dureté d'environ 30 Shore.

10. Sous-vêtement selon la revendication 8 ou 9, dans lequel le silicone formant la couche de renfort (8) est déposée sur le côté d'une première piece textile appelé intérieur, destiné a venir en appui sur une deuxième pièce textile avec une épaisseur comprise entre 0,1 et 3 mm, et dans lequel une fine couche de silicone est déposée sur la face intérieure complète de la deuxième pièce textile avec une épaisseur comprise entre 0,005 et 0,1 mm.

11. Sous-vêtement selon l'une quelconque des revendications 7 à 10, **caractérisé en ce que** les textiles ont une capacité d'élongation d'au moins 125 % dans l'une des directions.

12. Soutien-gorge constitué d'un sous-vêtement selon l'une quelconque des revendications 7 à 11, caractérisé en ce le soutien-gorge comporte au moins une couche de renfort (8) dans la partie inférieure des bonnets (6) du soutien-gorge recevant les seins.

13. Soutien-gorge selon la revendication 12, **caractérisé en ce que** la découpe du bord (24) du soutien-gorge qui se trouve en haut des bonnets (6), n'inclut pas une couche de renfort épaisse.

## Patentansprüche

1. Verfahren zur Herstellung eines Unterkleids, umfassend zwei in Schichten übereinander angeordnete Textilien, umfassend:
auf gewisse Teile das Aufbringen von Verstärkungen (8), umfassend eine dicke Schicht eines elastischen Materials mit Formgedächtnis,
die Polymerisation dieses elastischen Materials mit Formgedächtnis sowie die Formung der Textilien des Unterkleids durch Warmformen,
wobei das Herstellungsverfahren auch einen Schritt des Aufbringens einer dünnen Schicht eines elastischen Klebstoffes auf die gesamte Oberfläche mindestens eines der Textilien und sodann einen Schritt der Polymerisation dieser dünnen Klebstoffschicht beim Warmformen zur Formung umfasst, und
**dadurch gekennzeichnet, dass** das Herstellungsverfahren einen Schritt des vorherigen Aufbringens einer Barriereschicht aus einem elastischen Material auf das Textil, das die Verstärkungsschicht (8) aufnimmt, umfasst, die vor dem Aufbringen dieser Verstärkung polymerisiert wird.

2. Herstellungsverfahren nach Anspruch 1, **dadurch gekennzeichnet, dass** das Herstellungsverfahren einen Schritt der Polymerisation der Verstärkungsschicht (8) vor der Polymerisation der dünnen Klebstoffschicht umfasst.

3. Herstellungsverfahren nach Anspruch 1 oder 2, **dadurch gekennzeichnet, dass** das Herstellungsverfahren Schritte des Aufbringens mehrerer Verstärkungsschichten (8) auf mindestens eines der Textilien jedes Mal nach der Polymerisation der vorhergehenden Schicht umfasst.

4. Herstellungsverfahren nach Anspruch 3, **dadurch gekennzeichnet, dass** die letzte Verstärkungsschicht (8) gleichzeitig mit der dünnen Klebstoffschicht beim Warmformen polymerisiert wird.

5. Herstellungsverfahren nach einem der vorhergehenden Ansprüche, **dadurch gekennzeichnet, dass** nach der Polymerisation der dünnen Klebstoffschicht beim Warmformen das Verfahren einen Schritt des Schneidens der Ränder des Unterkleids (4) umfasst.

6. Herstellungsverfahren nach einem der vorhergehenden Ansprüche, bei dem das Aufbringen der Verstärkungsschicht (8) durch ein Siebdruckverfahren erfolgt, umfassend das Verlegen einer dünnen Gate-Elektrode, umfassend Öffnungen, die entlang der herzustellenden Verstärkungszonen teilweise freigelegt sind, dann das Schieben eines Abziehers über diese Gate-Elektrode, um das sich darauf befindende Material dazu zu zwingen, durch die Öffnungen zu strömen.

7. Unterkleid, umfassend zwei übereinander angeordnete Textilien, umfassend zwischen sich mindestens eine dicke Verstärkungsschicht (8) aus einem polymerisierten elastischen Material mit Formgedächtnis, **dadurch gekennzeichnet, dass** das Unterkleid mit einem Herstellungsverfahren nach einem der vorhergehenden Ansprüche hergestellt wird, so dass das Unterkleid eine dünne Schicht aus einem polymerisierten elastischen Klebstoff auf der gesamten Oberfläche mindestens eines der Textilien und eine Barriereschicht aus einem elastischen Material, die auf dem Textil, das die Verstärkungsschicht (8) aufnimmt, polymerisiert ist, aufweist.

8. Unterkleid nach Anspruch 7, **dadurch gekennzeichnet, dass** das elastische Material mit Formgedächtnis sowie der elastische Klebstoff ein Silikon ist.

9. Unterkleid nach Anspruch 8, bei dem das Silikon eine Härte von ungefähr 30 Shore hat.

10. Unterkleid nach Anspruch 8 oder 9, bei dem das die Verstärkungsschicht (8) bildende Silikon auf die Seite eines ersten Textilteils, Innenseite, genannt aufgebracht wird, die dazu bestimmt ist, an einem zweiten Textilteil mit einer Dicke zwischen 0,1 und 3 mm zur Anlage zu gelangen, und bei dem eine dünne Silikonschicht auf die komplette Innenseite des zweiten Textilteils mit einer Dicke zwischen 0,005 und 0,1 mm aufgebracht wird.

11. Unterkleid nach einem der Ansprüche 7 bis 10, **dadurch gekennzeichnet, dass** die Textilien eine Dehnfähigkeit von mindestens 125 % in eine der Richtungen haben.

12. Büstenhalter, der von einem Unterkleid nach einem der Ansprüche 7 bis 11 gebildet ist, **dadurch gekennzeichnet, dass** der Büstenhalter mindestens eine Verstärkungsschicht (8) in einem unteren Teil der Büstenhalterkörbchen (6), die die Brüste aufnehmen, umfasst.

13. Büstenhalter nach Anspruch 12, **dadurch gekennzeichnet, dass** das Schneiden des Randes (24) des Büstenhalters, der sich oben an den Körbchen (6) befindet, keine dicke Verstärkungsschicht einschließt.

## Claims

1. Process for producing an undergarment comprising two superposed textiles, in layers, comprising:
the depositing, on certain parts, of reinforcements (8) comprising a thick layer of shape-memory elastic material,
the polymerization of this shape-memory elastic material and also the shaping of the textiles of the undergarment by thermoforming,
the production process also comprising a step of depositing, on the entire surface of at least one of the textiles, a thin layer of an adhesive-bonding elastic material and then a step of polymerizing this thin layer of adhesive bonding during the thermoforming of shaping, and
**characterized in that** the production process comprises a step of prior depositing, on the textile receiving the reinforcement layer (8), of a barrier layer made of elastic material, which is polymerized before the depositing of this reinforcement.

2. Production process according to Claim 1, **characterized in that** the production process comprises a step of polymerizing the reinforcement layer (8), before the polymerization of the thin layer of adhesive bonding.

3. Production process according to Claim 1 or 2, **characterized in that** the production process comprises steps of depositing several reinforcement layers (8) on at least one of the textiles after the polymerization, each time, of the preceding layer.

4. Production process according to Claim 3, **characterized in that** the final reinforcement layer (8) is polymerized at the same time as the thin layer of adhesive bonding during the thermoforming.

5. Production process according to any one of the preceding claims, **characterized in that**, after the polymerization of the thin layer of adhesive bonding during the thermoforming, the production process comprises a step of cutting the edges of the undergarment (4).

6. Production process according to any one of the preceding claims, in which the depositing of the reinforcement layer (8) is carried out by means of a serigraphy process comprising the laying of a thin mesh comprising partially cleared openings according to the zones of reinforcement to be pre¬pared, then the sliding of a squeegee over this mesh so as to force the material above to pass through the openings.

7. Undergarment comprising two superimposed textiles comprising between them at least one thick reinforcement layer (8) of a polymerized shape-memory elastic material, **characterized in that** the undergarment is produced with a production process according to any one of the preceding claims, such that said undergarment has a thin layer of a polymerized adhesive-bonding elastic material over the entire surface of at least one of the textiles and a barrier layer of an elastic material which is polymerized on the textile which receives the reinforcement layer (8).

8. Undergarment according to Claim 7, **characterized in that** the elastic shape-memory material and also the adhesive-bonding elastic material are a silicone.

9. Undergarment according to Claim 8, in which the silicone has a hardness of approximately 30 Shore.

10. Undergarment according to Claim 8 or 9, in which the silicone forming the reinforcement layer (8) is deposited on the side of a first textile piece called inner, intended to come to bear on a second textile piece with a thickness of between 0.1 and 3 mm, and in which a thin layer of silicone is deposited on the complete inner face of the second textile piece with a thickness of between 0.005 and 0.1 mm.

11. Undergarment according to any one of Claims 7 to 10, **characterized in that** the textiles have an elongation capacity of least 125% in one of the directions.

12. Bra consisting of an undergarment according to any one of Claims 7 to 11, **characterized in that** the bra comprises at least one reinforcement layer (8) in the lower part of the cups (6) of the bra receiving the breasts.

13. Bra according to Claim 12, **characterized in that** the cut of the edge (24) of the bra which is at the top of the cups (6) does not include a thick reinforcement layer.
